# EUROPÄISCHE PATENTSCHRIFT

(11) **EP 2 156 712 B1**
(45) Veröffentlichungstag und Bekanntmachung des Hinweises auf die Patenterteilung: **17.08.2011**
(21) Anmeldenummer: 07765409.3
(22) Anmeldetag: 14.06.2007
(51) Int. Cl.: H05B 41/288

(54) **SCHALTUNGSANORDNUNG ZUM BETRIEB VON ENTLADUNGSLAMPEN UND VERFAHREN ZUM BETRIEB VON ENTLADUNGSLAMPEN**
CIRCUIT ARRANGEMENT FOR OPERATING DISCHARGE LAMPS AND METHOD FOR OPERATING DISCHARGE LAMPS
INSTALLATION DE CIRCUIT POUR LA COMMANDE DE LAMPES À DÉCHARGE ET PROCÉDÉ DE COMMANDE DE LAMPES À DÉCHARGE

(43) Veröffentlichungstag der Anmeldung: 24.02.2010
(73) Patentinhaber: OSRAM Gesellschaft mit beschränkter Haftung, 81543 München (DE)
(72) Erfinder: BREUER, Christian, 44267 Dortmund (DE); BRÜCKEL, Martin, 85748 Garching (DE); REITER, Bernhard, 81541 München (DE); HUBER, Andreas, 82216 Maisach (DE)
(86) Internationale Anmeldenummer: PCT/EP2007/055867
(87) Internationale Veröffentlichungsnummer: WO 2008/151669

(56) Entgegenhaltungen:
- US-A1- 2003 098 659
- US-A1- 2004 000 880
- US-A1- 2005 151 483

## Beschreibung

### Technisches Gebiet

Die Erfindung betrifft eine Schaltungsanordnung zum Betrieb von Entladungslampen mit Wechselstrom, insbesondere von Hoch- und Höchstdruck-Entladungslampen, wie sie in Geräten zur Projektion von Bildern Verwendung finden. Die Erfindung beschäftigt sich mit dem Problem von Flackererscheinungen, die durch eine Bogenunruhe der Entladungslampen nach einem Polaritätswechsel des Lampenstroms verursacht werden. Insbesondere beschäftigt sich die Erfindung mit Problemen, die mit dem Erkennen von Veränderungen der Elektroden der Entladungslampen zusammenhängen.

### Stand der Technik

Beim Betrieb von Entladungslampen, die im Folgenden auch kurz Lampe genannt werden, gibt es das Phänomen des Wachstums von Elektrodenspitzen. Material, das von den Elektroden an einer Stelle abdampft wird an bevorzugten Stellen auf der Elektrode wieder abgeschieden und führt zur Ausbildung von Elektrodenspitzen. Diese Elektrodenspitzen haben zunächst den Vorteil, dass der Plasma-Bogen der in der Lampe erzeugten Bogenentladung einen stabilen Ansatzpunkt auf der Elektrode findet und nicht zwischen mehreren Ansatzpunkten springt. Dieses Springen des Entladungspunktes wird auch Bogenspringen bezeichnet und äußert sich in einem Flackern der Lampe. Dies stört besonders, wenn das Licht der Lampe zur Projektion von Bildern benutzt wird.

Der Ansatzpunkt des Bogens bildet sich nur aus, auf einer Elektrode, die momentan als Kathode wirkt. Der Ansatz des Bogens auf der Anode ist flächig. Bei Lampen, die mit Wechselstrom betrieben werden, ist deshalb das Bogenspringen ein verbreitetes Problem, da mit jedem Polaritätswechsel der Bogen auf der von der Anode zur Kathode wechselnden Elektrode einen Ansatzpunkt finden muss. Die oben beschriebenen Elektrodenspitzen bilden einen bevorzugten Ansatzpunkt für den Bogen und verringern somit ein Bogenspringen.

Durch die Elektrodenspitzen können allerdings auch Probleme auftreten. Unter ungünstigen Verhältnissen können sich mehrere Elektrodenspitzen ausbilden. Dann kann es vorkommen, dass der Bogenansatz zwischen den verschiedenen Elektrodenspitzen springt.

In der Schrift EP 1 624 733 A2 (Suzuki) wird dieses Problem dadurch gelöst, dass die Betriebsfrequenz, d. h. die Frequenz des Wechselstroms, mit der die Lampe betrieben wird, für eine begrenzte Zeit reduziert wird. Dieses Verfahren wirkt dadurch, dass sich eine Elektrode, während sie als Anode wirkt, aufheizt und während sie als Kathode wirkt abkühlt. Man erhält eine Temperaturschwankung mit einem zeitlichen Verlauf, der der Betriebsfrequenz entspricht. Bei hohen Frequenzen stellt sich bedingt durch die thermische Kapazität der Elektroden eine mittlere Temperatur ein. Im so genannten Rechteckbetrieb werden die Lampen mit einem rechteckförmigen Strom mit einer Frequenz von typischerweise 50 bis 5000 Hz betrieben. Abhängig von der Bauweise der Lampe kann es bereits bei 50 Hz zu einer merklichen Temperaturmodulation der Elektroden kommen. Bei starker Temperaturmodulation erreicht die Elektrode Temperaturen, bei denen die überzähligen Elektrodenspitzen abgeschmolzen werden.

Videoprojektoren benötigen häufig eine Lichtquelle die eine zeitliche Abfolge unterschiedlicher Farben aufweist. Wie in der Schrift US 5, 917, 558 (Stanton) beschrieben ist, kann dies durch ein rotierendes Farbrad erreicht werden, das aus dem Licht der Lampe wechselnde Farben filtert. Die Zeitdauern während derer das Licht eine bestimmte Farbe annimmt, brauchen nicht zwangsläufig gleich sein. Vielmehr kann über das Verhältnis dieser Zeitdauern zueinander eine gewünschte Farbtemperatur eingestellt werden, die sich für das projizierte Licht ergibt.

Üblicherweise wird die Lampe mit einem rechteckförmigen Lampenstrom betrieben. Als die o. g. Betriebsfrequenz wird der Kehrwert der Periodendauer des rechteckförmigen Lampenstroms verstanden. Der Lampenstrom wird im Stand der Technik aus einer Gleichstromquelle mit Hilfe einer Kommutierungseinrichtung erzeugt. Die Kommutierungseinrichtung besteht üblicherweise aus elektronischen Schaltern, die die Polarität der Gleichstromquelle im Takt des rechteckförmigen Lampenstroms kommutieren. Bei der Kommutierung sind Überschwinger in der Praxis nicht vollständig zu vermeiden. Deshalb wird im Stand der Technik der Zeitpunkt, zu dem eine Kommutierung stattfinden soll mit dem Zeitpunkt zu dem die Farbe des Lichts wechselt zusammengelegt, um die Überschwinger auszublenden. Dazu wird ein Sync-Signal bereitgestellt, das synchron zum o. g. Farbrad einen Sync-Impuls aufweist. Mit Hilfe des Sync-Signals werden der Farbwechsel und die Kommutierung des Lampenstroms synchronisiert.

Im Allgemeinen wachsen Elektrodenspitzen auf beiden Elektroden nicht in gleicher weise. Dies kann dadurch hervorgerufen werden, dass die Einbaubedingungen der Lampe den Wärmehaushalt der Elektroden unterschiedlich beeinflussen. Insbesondere dann wenn eine Lampe nicht horizontal betrieben wird, führt dies in der Regel zu einer höheren Temperatur der höher liegenden Elektrode. Wachsen auf einer Elektrode mehrfach Spitzen, so wird im oben genannten Stand der Technik ein Abschmelzen der Elektroden vorgeschlagen, um Flackererscheinungen zu vermeiden. Ein Abschmelzen beider Elektroden kann aber die Elektrode mit nur einer Elektrodenspitze schädigen. Die eine Elektrodenspitze wird möglicherweise abgeschmolzen obwohl sie keine Flackererscheinungen bewirkt.

### Darstellung der Erfindung

Die Aufgabe der vorliegenden Erfindung ist es, eine Schaltungsanordnung zum Betrieb einer Entladungslampe bereitzustellen, bei der ein Abschmelzen von Elektrodenspitzen nur bei derjenigen Elektrode geschieht, die mehrere Elektrodenspitzen aufweist.

Weiterhin ist es eine Aufgabe der vorliegenden Erfindung ein zur oben genannten Aufgabe entsprechendes Verfahren bereitzustellen. Da die Erfindung auch einen Verfahrensaspekt hat, ist die folgende Beschreibung sowohl im Hinblick auf den Vorrichtungscharakter als auch den Verfahrenscharakter zu verstehen.

Die Aufgabe wird gelöst durch eine Schaltungsanordnung zum Betrieb einer Entladungslampe, wobei die Schaltungsanordnung eine Kommutierungseinrichtung umfasst, die einen Eingang aufweist, der mit einer Gleichstromquelle gekoppelt ist und einen Ausgang aufweist, der mit einer Entladungslampe koppelbar ist, wobei die Kommutierungseinrichtung so gestaltet ist, dass sie die Gleichstromquelle mit dem Ausgang koppelt und die Polarität mit der die Gleichstromquelle mit dem Ausgang gekoppelt ist, durch eine Steuereinrichtung kommutierbar ist. Die Stromrichtung durch die Lampe wird also gesteuert durch die Steuereinrichtung kommutiert, das heißt umgepolt. Die Steuereinrichtung weist einen Messeingang auf, der mit einer Messeinrichtung gekoppelt ist, die dazu ausgelegt ist, einen Messwert zu liefern, der ein Maß für die Größe einer Lampenspannung ist. Erfindungsgemäß steuert die Steuereinrichtung die Kommutierungseinrichtung so, dass diejenige Polarität des Lampenstroms länger an den Ausgang gekoppelt ist, bei der eine höhere Lampenspannung herrscht.

Die vorgeschlagene Lösung hat sich durch Untersuchungen ergeben, die zeigen, dass die Lampenspannung zumindest im Mittel erhöht ist, wenn diejenige Elektrode momentan Anode ist, welche mehrere Elektrodenspitzen aufweist.

Eine weitere Möglichkeit zur Detektion der Elektrode mit mehreren Elektrodenspitzen besteht darin die Fluktuationen der Lampenspannung während unterschiedlicher Polaritäten zu vergleichen. Dazu kann über einen Hochpass der Wechselspannugsanteil der Lampenspannung während einer Polarität erfasst werden und mit dem Wechselstromanteil während der anderen Polarität verglichen werden. Diejenige Elektrode, die bei der Polarität mit dem höheren Wechselspannungsanteil Kathode ist, weist mehrere Elektrodenspitzen auf.

Die einfachste Möglichkeit festzustellen, bei welcher Polarität die höhere Lampenspannung herrscht geschieht mit Hilfe eines Vergleichers, der der Steuereinrichtung zugeordnet werden kann. Der Vergleicher speichert den Messwert in einer ersten und in einer zweiten Polarität und vergleicht die gespeicherten Messwerte. Der Vergleicher gibt ein Markierungssignal ab, das der Steuereinrichtung als Information darüber dient, bei welcher Polarität eine höhere Lampenspannung herrscht. Selbstverständlich ist dies in diesem Fall diejenige Polarität, der der höhere der gespeicherten Messwerte zugeordnet ist. Das Markierungssignal kann so ausgestaltet sein, dass in einer Speicherzelle eines Microcontrollers ein Bit gesetzt wird, das eine Verlängerung der Zeit bewirkt, in der diejenige Polarität des Lampenstroms vorliegt, bei der die höhere Lampenspannung herrscht. Dem Fachmann sind andere Ausgestaltungen des Markierungssignal und dessen Umsetzung gemäß der Lehre der vorliegenden Erfindung geläufig.

Da die Lampenspannung zufälligen Fluktuationen unterworfen ist, birgt die Messung einzelner Werte der Lampenspannung eine Unsicherheit. Vorteilhaft bildet der Vergleicher deshalb aus den Messwerten einen Mittelwert über ein vorgebbares erstes Zeitintervall und speichert den Mittelwert. Natürlich darf die Mittelwertbildung jeweils nur über Werte passieren, die einer Polarität des Lampenstroms zugeordnet sind. Bei einem rechteckförmigen Lampenstrom kann sich die Mittelwertbildung jeweils über eine halbe Periode des Rechtecks erstrecken. Um die Messgenauigkeit zu erhöhen, kann die Mittelwertbildung auch über mehrere Halbperioden gleicher Polarität des Lampenstroms erfolgen.

Der Ausdruck "es herrscht eine höhere Rampenspannung" kann in der vorliegenden Patentanmeldung demnach so ausgelegt werden, dass im Mittel eine höhere Lampenspannung herrscht. Entscheidend ist, dass die Steuereinrichtung einen Vergleich der Lampenspannungen bei unterschiedlicher Lampenstrom-Polarität vornimmt und die Entscheidung bei welcher Polarität die höhere Lampenspannung herrscht von den Werten der Lampenspannung bei unterschiedlicher Polarität abhängt. Ist die Steuereinrichtung digital realisiert, so kann vorteilhaft eine sog. Histogrammauswertung vorgenommen werden. Die in die Steuereinrichtung einlaufenden Messwerte für die Lampenspannung einer Polarität werden nach Intervallen sortiert und dasjenige Intervall mit den meisten zugeordneten Messwerten wird zum Vergleich mit der anderen Polarität herangezogen.

Die Lampenspannung bei einer Polarität des Lampenstroms ist nie exakt gleich der Lampenspannung der anderen Polarität. Geringfügige Unterschiede der verglichenen Lampenspannungen können auch vorhanden sein, wenn keine der Elektroden mehrfache Elektrodenspitzen aufweist. Durch Messungen kann für einen gewünschten Lampentyp ermittelt werden, bei welcher Differenz der jeweiligen Lampenspannungen mit hoher Wahrscheinlichkeit mehrere Elektrodenspitzen vorliegen. Vorteilhaft gibt deshalb er Vergleicher erst dann ein Markierungssignal abgibt, wenn die Differenz der gespeicherten Messwerte eine vorgebbare Schwelle überschreitet. Diese Schwelle ist entsprechend den oben genannten Messungen so gewählt, dass ein Markierungssignal erst anliegt, wenn mit hoher Wahrscheinlichkeit mehrere Elektrodenspitzen vorliegen.

Um die Messgenauigkeit noch weiter zu erhöhen kann der Vergleicher nach der Differenzbildung der gespeicherten Messwerte auch den Mittelwert des Differenzwerts über ein vorgebbares zweites Zeitintervall bilden und das Markierungssignal abgeben, falls dieser Mittelwert der Differenz einen vorgebbaren Grenzwert überschreitet. Das Wachsen von Elektrodenspitzen, die eine Bogenunruhe verursachen können dauert bei bekannten Lampen länger als eine Sekunde. Deshalb kann das zweite Zeitintervall im Sekundenbereich gewählt werden.

Üblicherweise ist der Lampenstrom rechteckförmig. Das Rechtecksignal dazu liefert die Steuereinrichtung an die Kommutierungseinrichtung. Bei Videoprojektoren mit Farbrad muss eine Kommutierung synchron zur Umdrehung des Farbrads erfolgen. Dazu weist die Steuereinrichtung einen Sync-Eingang auf, an dem im Betrieb ein Sync-Signal anliegt, das Sync-Impulse enthält. Die Steuereinrichtung bewirkt nun eine Kommutierung, die synchron zu den Sync-Impulsen ist. Wie oben erläutert, wird der Farbwechsel des projizierten Lichts üblicherweise durch ein rotierendes Farbrad erzeugt. Wenn eine Kommutierung erfolgt, dann soll sie gleichzeitig mit einem Farbwechsel erfolgen. Es ist jedoch auch ein Farbwechsel denkbar, der ohne Kommutierung abläuft. Im Allgemeinen ist das Sync-Signal so ausgelegt, dass es pro Umdrehung des Farbrads einen Sync-Impuls aufweist. Das Sync-Signal enthält also im Allgemeinen nicht zu jedem Farbwechsel einen Sync-Impuls. Vielmehr ist die Abfolge der Farbwechsel bevorzugt in der Steuereinrichtung abgespeichert. Dies muss individuell auf das verwendete Farbrad abgestimmt sein. Insbesondere muss der Abstand der Farbwechsel auf dem Farbrad nicht konstant sein. Es sind auch Farbräder bekannt, die mehrere Sync-Impulse pro Umdrehung abgibt. Die entscheidende Funktion der Sync-Impulse liegt darin, dass die Steuereinrichtung Information über die momentane Stellung des Farbrades erhält und damit Information darüber hat, zu welchen Zeitpunkten Farbwechsel auftreten.

Unter der Synchronität zwischen den Sync-Impulsen und der Kommutierung der Polarität der Gleichstromquelle am Ausgang der Kommutierungseinrichtung ist demnach folgendes zu verstehen: In der Steuereinrichtung ist eine Abfolge von Zeitpunkten abgespeichert, zu denen eine Kommutierung erfolgen soll. Bei jedem Sync-Impuls startet die Steuereinrichtung eine Abfolge von Kommutierungen entsprechend den abgespeicherten Zeitpunkten. Die Zeitpunkte sind allerdings nicht fix, sondern werden normiert auf den zeitlichen Abstand zweier Sync-Impulse. Für ein gegebenes Farbrad fällt damit eine Kommutierung immer auf einen Farbwechsel, auch wenn sich die Drehzahl des Farbrads ändert. Eine Unterdrückung von Kommutierungen greift in die Synchronisierung zwischen der Kommutierung und den Sync-Impulsen nicht ein. Alle nicht unterdrückten Kommutierungen fallen mit einem Farbwechsel zeitlich zusammen.

Die Lehre der vorliegenden Erfindung verlangt einerseits eine Verlängerung der Zeit in der ein Lampenstrom mit derjenigen Polarität fließt, bei der eine höhere Lampenspannung herrscht. Andererseits bewirkt die Steuereinrichtung in einem z. B. durch Sync-Impulse vorgegebenen Zeitabstand eine Kommutierung der Polarität. Um der Synchronität und der Verlängerung einer Polarität zu genügen unterdrückt die Steuereinrichtung vorteilhaft mindestens eine Kommutierung, die auf eine Polarität folgt, bei der eine höhere Lampenspannung herrscht.

Falls an die Synchronität keine besonderen Anforderungen gestellt sind, kann die Steuereinrichtung die Kommutierungseinrichtung so steuern, dass für eine vorgegebene erste Schaltzeit eine erste Polarität an den Ausgang gekoppelt ist und für eine vorgegebene zweite Schaltzeit eine zweite Polarität an den Ausgang gekoppelt ist, wobei die Steuereinrichtung die erste Schaltzeit verlängert, falls bei der ersten Polarität eine höhere Lampenspannung herrscht

Möglicherweise ist die Lampe für eine bestimmte Betriebsfrequenz optimiert. Dann ist es vorteilhaft, wenn die Steuereinrichtung die zweite Schaltzeit um den Betrag verkürzt um den sie die erste Schaltzeit verlängert.

Die in der vorliegenden Offenbarung genannten Lampen sind für Wechselstrom ausgelegt. Da der vorgeschlagene Abschmelzvorgang einen Gleichstromanteil im Lampenstrom bewirkt, ist darauf zu achten, dass der Gleichstromanteil nicht zur Zerstörung der Lampe führt. Zumindest muss deshalb die Steuereinrichtung die erste und zweite Schaltzeit auf vorgegebene Werte rücksetzen, falls die Lampenspannung bei beiden Polaritäten gleich ist. Diese vorgegebenen Werte sollen sicherstellen, dass der Lampenstrom im Mittel keinen Gleichstromanteil enthält.

Vorteilhaft kann die Unterdrückung der Kommutierung auch über eine vorgegebene DC-Zeit erfolgen. Vorteilhaft wird die DC-Zeit so kurz gewählt, dass eine Schädigung der Lampe durch resultierenden Gleichstromanteil ausgeschlossen ist.

Anstatt der DC-Zeit kann auch eine Anzahl N vorgegeben werden, die die Anzahl der Kommutierungen vorgibt.

Bei Elektroden, die eine kleine thermische Trägheit aufweisen, kann bereits das Unterdrücken von zwei aufeinander folgenden Kommutierungen zu einer Überhitzung der Elektrode führen. Dann ist es vorteilhaft nur jede m-te Kommutierung zu unterdrücken. Damit kann eine sehr präzise Steuerung des Abschmelzvorgangs vorgenommen werden. "m" muss dazu eine ungerade natürliche Zahl sein, da sonst kein Gleichstromanteil entsteht, der eine gewünschte einseitige Abschmelzung bewirkt.

In der Praxis ist es üblich, die Steuereinrichtung mit Hilfe eines Microcontrollers zu realisieren. Der Messeingang und gegebenenfalls der Sync-Eingang führen zu einem Analog- bzw. Digitaleingang des Microcontrollers. Über bekannte Treiberschaltungen steuert der Microcontroller die elektronischen Schalter, die im allgemeinen MOSFETS sind. Der Großteil der Erfindung ist dann in der Software des Microcontrollers realisiert.

### Kurze Beschreibung der Zeichnungen

Im Folgenden soll die Erfindung anhand von Ausführungsbeispielen näher erläutert werden. Die Figuren zeigen:
- Fig. 1: Eine Schaltungsanordnung zum Betrieb einer Hochdruckentladungslampe,
- Fig. 2: den zeitlichen Verlauf des Lampenstroms ohne Unterdrückung von Kom- mutierungen,
- Fig. 3: den zeitlichen Verlauf des Lampenstroms mit Unterdrückung von zwei Kommutierungen,
- Fig. 4: den zeitlichen Verlauf des Lampenstroms mit Unterdrückung jeder dritten Kommutierung,
- Fig. 5: den zeitlichen Verlauf des Lampenstroms mit verlängerter Schaltzeit für eine Polarität.

### Bevorzugte Ausführung der Erfindung

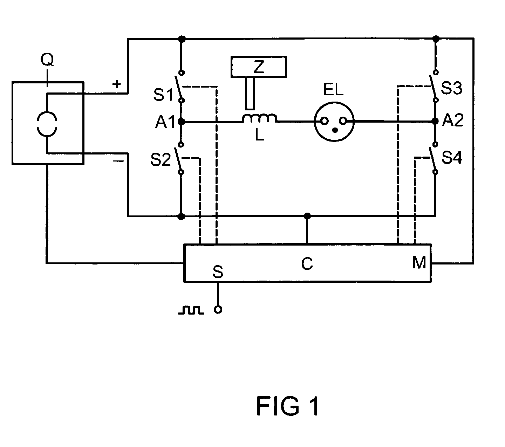

Figur 1 zeigt eine Schaltungsanordnung zum Betrieb einer Hochdruckentladungslampe, wie sie topologisch aus dem Stand der Technik bekannt ist. Die elektronischen Schalter S1, S2, S3 und S4 sind in einer Vollbrückenschaltung zwischen den Plus- und den Minuspol einer Gleichstromquelle Q geschaltet. Die Gleichstromquelle Q besteht im Allgemeinen aus einem Tiefsetzer (Buck-Converter), der seine Energie beispielsweise aus einer Netzspannung bezieht. Im Brückenzweig, der zwischen den Knoten A1 und A2 liegt, ist die Lampe EL geschaltet. In Serie zur Lampe EL ist eine Wicklung L eines Zündtrafos geschaltet, in den eine Zündeinrichtung Z eine Spannung einkoppelt, die zur Zündung der Lampe dient. Diese Zündvorrichtung spielt für die vorliegende Erfindung keine Rolle.

Die Vollbrückenschaltung bildet die Kommutierungseinrichtung. Den Eingang der Kommutierungseinrichtung bilden ein oberes und ein unteres Potenzial der Vollbrückenschaltung, die mit dem Plus- und dem Minuspol der Gleichstromquelle Q verbunden sind. Den Ausgang der Kommutierungseinrichtung bildet der Brückenzweig zwischen den Knoten A1 und A2.

Sind die Schalter S 1 und S4 geschlossen, so hat der Lampenstrom eine erste Polarität und es fließt ein Lampenstrom vom Knoten A1 zum Knoten A2. Nach einer Kommutierung sind die Schalter S3 und S2 geschlossen und es fließt ein Lampenstrom mit einer zweiten Polarität vom Knoten A2 zum Knoten A1. Damit wird ein rechteckförmiger Strom in der Lampe EL erzeugt. Die Bezeichnungen von erster und zweiter Polarität sind willkürlich und beschränken nicht die Allgemeinheit.

Gesteuert werden die Schalter von der Steuereinrichtung C. Gestrichelt sind die Ansteuerleitungen von der Steuereinrichtung C zu den Schaltern eingezeichnet. Die hoch liegenden Schalter S1 und S3 benötigen zur Ansteuerung eine Ladungspumpe, die in der Steuereinrichtung C mit enthalten sein kann und nicht dargestellt ist.

Über einen Messeingang M wird der Steuereinrichtung die Eingangsspannung der Vollbrücke zugeführt, die der Lampenspannung entspricht. Herrscht in einer Polarität des Lampenstroms eine um einen vorgegebenen Schwellwert höhere Lampenspannung als in der anderen Polarität, so unterdrückt die Steuereinrichtung C mindestens eine Kommutierung, die auf die Polarität mit der höheren Lampenspannung folgen würde.

An einem Sync-Eingang S liegt ein Sync-Signal an das vom Antrieb eines nicht dargestellten, rotierenden Farbrades bereit gestellt wird. Eine Verbindung zwischen der Steuereinrichtung C und der Gleichstromquelle Q deutet an, dass die Steuereinrichtung C auch zur Regelung des Lampenstroms dienen kann.

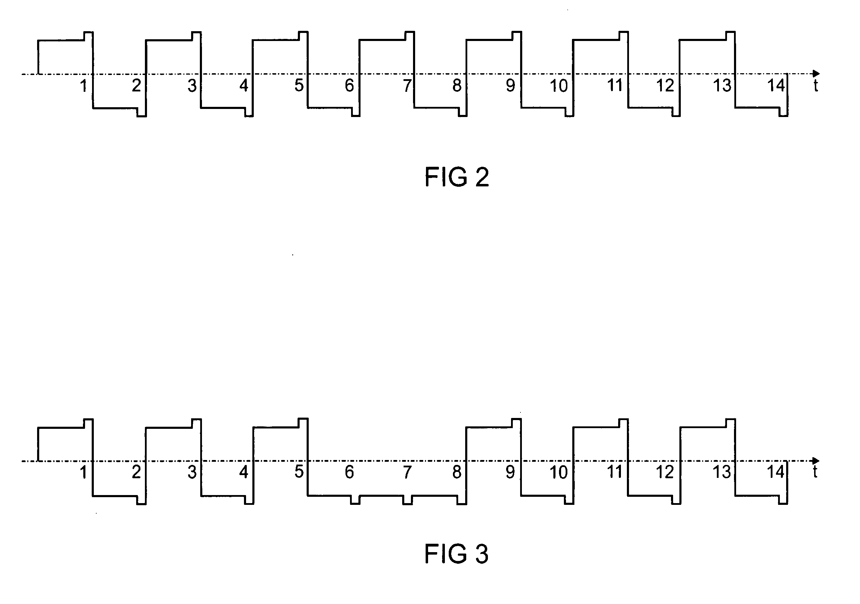

In Figur 2 ist der zeitliche Verlauf des Lampenstroms dargestellt ohne dass eine Unterdrückung einer Kommutierung stattfindet. Die Kommutierungen sind mit Ziffern 1 bis 14 nummeriert. Unmittelbar vor der Kommutierung ist der Lampenstrom pulsförmig erhöht. Dabei handelt es sich um eine Maßnahme zur Verringerung von Flackererscheinungen, wie sie beispielsweise in der Schrift WO 95/35645 beschrieben wird. Diese Maßnahme ist unabhängig von der Verlängerung einer Lampenstrom-Polarität gemäß der vorliegenden Erfindung. Die Frequenz des rechteckförmigen Verlaufs des Stroms liegt üblicherweise zwischen 50 Hz und 5 kHz.

In Figur 3 ist zu erkennen, dass die aufeinander folgenden Kommutierungen 6 und 7 durch die Steuereinrichtung C unterdrückt wurden. Nach dieser Maßnahme stoppt die Steuereinrichtung C zunächst das Unterdrücken von weiteren Kommutierungen, um die Überhitzung der Lampe sicher zu vermeiden. Die Steuereinrichtung C überprüft weiterhin, ob die Bedingung für mehrfache Elektrodenspitzen, das heißt ob unterschiedliche Lampenstrom-Polaritäten unterschiedliche Lampenspannungen aufwiesen. Falls dies der Fall ist, unterdrückt die Steuereinrichtung C erneut zwei aufeinanderfolgende Kommutierungen die der Lampenstrom-Polarität mit der höheren Lampenspannung zugeordnet sind.

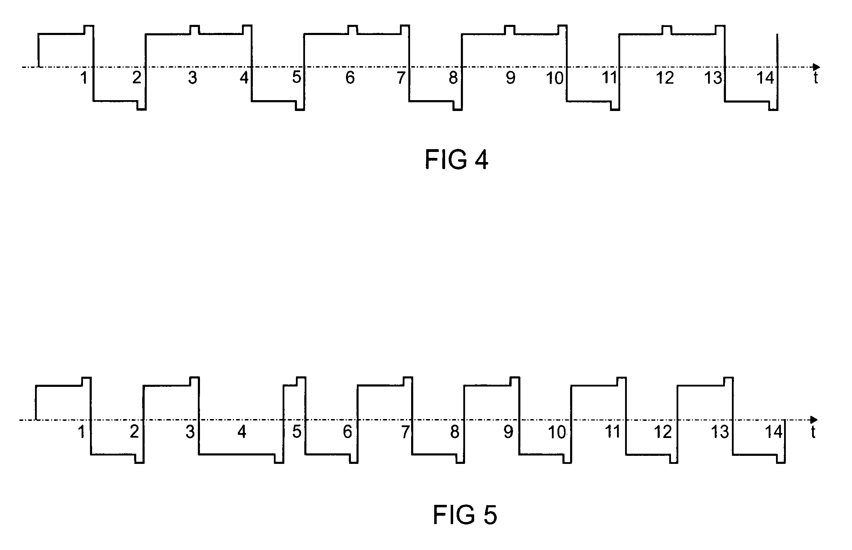

In Figur 4 sind im Vergleich zur Figur 3 nie zwei aufeinander folgende Kommutierungen unterdrückt. Dies kann bei Elektroden mit geringer thermischer Trägheit oder bei niedriger Betriebsfrequenz nötig sein, um die betreffende Elektrode nicht zu überhitzen. In Figur 4 ist jede dritte Kommutierung unterdrückt. Es kann auch jede fünfte, siebte oder m-te Kommutierung unterdrückt werden, wobei m eine ungerade natürliche Zahl ist. "m" muss ungerade sein, damit die Abschmelzung immer auf die gleiche Elektrode wirkt. Die Steuereinrichtung C kann die Unterdrückung für eine vorgegebene Zeit, für eine vorgegebene Anzahl von Unterdrückungen oder so lange vornehmen, bis kein Ungleichgewicht der Lampenspannungen bei unterschiedlicher Lampenstrom-Polarität mehr vorliegt.

In Figur 5 ist der zeitliche Verlauf eines Lampenstroms dargestellt, bei dem eine Kommutierung nicht unterdrückt wurde, sondern zeitlich verschoben. Damit verlängert die Steuereinrichtung C den Stromfluß mit der Polarität, bei der die höhere Lampenspannung herrscht. In Figur 5 ist im gleichen Maß, wie der Stromfluß für eine Polarität verlängert ist, der Stromfluß für die andere Polarität verkürzt. In der Literatur wird die Veränderung, die die Steuereinrichtung C am zeitlichen Verlauf des Lampenstroms vornimmt auch Veränderung des Tastverhältnisses (Duty-Cycle) bezeichnet. Die Änderung des Tastverhältnisses ändert nicht die Grundfrequenz des Lampenstroms.

Falls eine Änderung der Grundfrequenz des Lampenstroms keine Nachteile bewirkt kann auch einseitig nur der Stromfluß mit einer Polarität verlängert werden, ohne den Stromfluß mit der anderen Polarität zu verkürzen.

Bezüglich der Dauer oder Wiederholung einer Änderung des Lampenstroms gemäß Figur 5 gelten die Aussagen zum Unterdrücken von Kommutierungen entsprechend.

## Patentansprüche

1. Schaltungsanordnung zum Betrieb einer Entladungslampe,
wobei die Schaltungsanordnung eine Kommutierungseinrichtung (S1, S2, S3, S4) umfasst,
die einen Eingang (+,-) aufweist, der mit einer Gleichstromquelle (Q) gekoppelt ist und einen Ausgang (A1, A2) aufweist, der mit einer Entladungslampe (EL) koppelbar ist,
wobei die Kommutierungseinrichtung (S1, S2, S3, S4) so gestaltet ist, dass sie die Gleichstromquelle (Q) mit dem Ausgang (A1, A2) koppelt und die Polarität mit der die Gleichstromquelle (Q) mit dem Ausgang (A1, A2) gekoppelt ist, durch eine Steuereinrichtung (C) kommutierbar ist,
wobei die Steuereinrichtung (C) einen Messeingang (M) aufweist, der mit einer Messeinrichtung gekoppelt ist, die dazu ausgelegt ist, einen Messwert zu liefern, der ein Maß für die Größe einer Lampenspannung ist,
wobei die Schaltungsanordnung (C) **dadurch gekennzeichnet ist,**
**dass** die Steuereinrichtung die Kommutierungseinrichtung (S1, S2, S3, S4) so steuert, dass diejenige Polarität länger an den Ausgang (A1, A2) gekoppelt ist, bei der eine höhere Lampenspannung herrscht.

2. Schaltungsanordnung gemäß Anspruch 1
wobei die Steuereinrichtung (C) **dadurch gekennzeichnet ist,**
**dass** sie einen Vergleicher aufweist, der den Messwert in einer ersten und in einer zweiten Polarität speichert, die gespeicherten Messwerte vergleicht und ein Markierungssignal abgibt, das der Steuereinrichtung (C) als Information darüber dient, bei welcher Polarität eine höhere Lampenspannung herrscht.

3. Schaltungsanordnung gemäß Anspruch 2
wobei der Vergleicher **dadurch gekennzeichnet ist,**
**dass** die gespeicherten Messwerte Mittelwerte über ein vorgebbares erstes Zeitintervall sind.

4. Schaltungsanordnung gemäß Anspruch 2 oder 3
wobei der Vergleicher **dadurch gekennzeichnet ist,**
**dass** er ein Markierungssignal nur abgibt, falls die Differenz der gespeicherten Messwerte eine vorgebbare Schwelle überschreitet.

5. Schaltungsanordnung gemäß Anspruch 2 bis 4
wobei der Vergleicher **dadurch gekennzeichnet ist,**
**dass** er den Mittelwert aus der Differenz der gespeicherten Messwerte bildet, den Mittelwert dieser Differenz über ein vorgebbares zweites Zeitintervall bildet und das Markierungssignal abgibt, falls dieser Mittelwert einen vorgebbaren Grenzwert überschreitet.

6. Schaltungsanordnung gemäß einem der obigen Ansprüche
**dadurch gekennzeichnet, dass**
die Steuereinrichtung (C) in einem vorgegebenen Zeitabstand eine Kommutierung der Polarität bewirkt
und dass die Steuereinrichtung (C) mindestens eine Kommutierung unterdrückt, die auf eine Polarität folgt, bei der eine höhere Lampenspannung herrscht.

7. Schaltungsanordnung gemäß einem der Ansprüche 1-5
**dadurch gekennzeichnet**,
die Steuereinrichtung (C) die Kommutierungseinrichtung (S1, S2, S3, S4) so steuert, dass für eine vorgegebene erste Schaltzeit eine erste Polarität an den Ausgang (A1, A2) gekoppelt ist und für eine vorgegebene zweite Schaltzeit eine zweite Polarität an den Ausgang (A1, A2) gekoppelt ist wobei die Steuereinrichtung (C) die erste Schaltzeit verlängert, falls bei der ersten Polarität eine höhere Lampenspannung herrscht.

8. Schaltungsanordnung gemäß Anspruch 7
**dadurch gekennzeichnet, dass** die Steuereinrichtung (C) die zweite Schaltzeit um den Betrag verkürzt um den sie die erste Schaltzeit verlängert.

9. Schaltungsanordnung gemäß Anspruch 7 oder 8
**dadurch gekennzeichnet,**
**dass** die Steuereinrichtung (C) die erste und zweite Schaltzeit auf vorgegebene Werte rücksetzt, falls die Lampenspannung bei beiden Polaritäten gleich ist.

10. Schaltungsanordnung gemäß einem der obigen Ansprüche,
**dadurch gekennzeichnet, dass** die Steuereinrichtung (C) einen Microcontroller umfasst, wobei Funktionen der Steuereinrichtung (C) durch ein Softwareprogramm im Microcontroller festgelegt sind.

11. Schaltungsanordnung gemäß einem der obigen Ansprüche,
**dadurch gekennzeichnet, dass** die Entladungslampe (EL) eine Höchstdruck-Entladungslampe ist.

12. Verfahren zum Betrieb einer Entladungslampe mit folgenden Schritten:
-- Bereitstellen einer Messeinrichtung, die dazu ausgelegt ist, einen Messwert zu liefern, der ein Maß für die Größe einer Lampenspannung ist
-- Koppeln einer Entladungslampe an eine Gleichstromquelle (Q) über eine Kommutierungseinrichtung (S1, S2, S3, S4),
-- Kommutieren der Polarität der Gleichstromquelle (Q) mit Hilfe der Kommutierungseinrichtung (S1, S2, S3, S4) jeweils nach einer vorgegebenen Schaltzeit
-- Speichern des Messwerts für jede Polarität,
-- Vergleichen der abgespeicherten Messwerte
-- Verlängern der Schaltzeit bei der Polarität, bei der die höhere Lampenspannung herrscht
-- Rücksetzten der Schaltzeit auf die vorgegebenen Werte, falls bei beiden Polaritäten die gleiche Lampenspannung herrscht.

13. Softwareprogramm **dadurch gekennzeichnet, dass** es eine Schaltungsanordnung gemäß Anspruch 1 derart steuert, dass das Verfahren gemäß Anspruch 12 abläuft.

14. Computer-Programm-Produkt, **dadurch gekennzeichnet, dass** das Softwareprogramm gemäß Anspruch 13 auf eine Schaltungsanordnung gemäß Anspruch 1 Speicherbar ist.

## Claims

1. Circuit arrangement for operating a discharge lamp,
wherein the circuit arrangement comprises a commutating device (S1, S2, S3, S4),
which exhibits an input (+, -) which is coupled to a direct-current source (Q) and has an output (A1, A2) which can be coupled to a discharge lamp (EL),
the commutating device (S1, S2, S3, S4) being designed in such a manner that it couples the direct-current source (Q) to the output (A1, A2) and the polarity with which the direct-current source (Q) is coupled to the output (A1, A2) can be commutated by a control device (C),
the control device (C) having a measurement input (M) which is coupled to a measuring device which is designed for delivering a measurement value which is a measure of the magnitude of a lamp voltage, the circuit arrangement (C) being **characterized in that** the control device controls the commutating device (S1, S2, S3, S4) in such a manner that the polarity at which a higher lamp voltage prevails is coupled longer to the output (A1, A2).

2. Circuit arrangement according to Claim 1, wherein the control device (C) is **characterized in that** it has a comparator which stores the measurement value in a first and in a second polarity, compares the stored measurement values and delivers a marking signal which is used by the control device (C) as information about the polarity at which a higher lamp voltage prevails.

3. Circuit arrangement according to Claim 2, wherein the comparator is **characterized in that** the stored measurement values are mean values over a predeterminable first time interval.

4. Circuit arrangement according to Claim 2 or 3, wherein the comparator is **characterized in that** it delivers a marking signal only if the difference of the stored measurement values exceeds a predeterminable threshold.

5. Circuit arrangement according to Claim 2 to 4, wherein the comparator is **characterized in that** it forms the mean value from the difference of the stored measurement values, forms the mean value of this difference over a predeterminable second time interval and delivers the marking signal if this mean value exceeds a predeterminable limit value.

6. Circuit arrangement according to one of the above claims, **characterized in that** the control device (C) effects a commutation of the polarity within a predetermined time interval, and **in that** the control device (C) suppresses at least one commutation which follows a polarity at which a higher lamp voltage prevails.

7. Circuit arrangement according to one of Claims 1-5, **characterized in that** the control device (C) controls the commutating device (S1, S2, S3, S4) in such a manner that for a predetermined first switching time, a first polarity is coupled to the output (A1, A2) and for a predetermined second switching time, a second polarity is coupled to the output (A1, A2), the control device (C) extending the first switching time if a higher lamp voltage prevails at the first polarity.

8. Circuit arrangement according to Claim 7, **characterized in that** the control device (C) shortens the second switching time by the amount by which it extends the first switching time.

9. Circuit arrangement according to Claim 7 or 8, **characterized in that** the control device (C) resets the first and second switching time to predetermined values if the lamp voltage is equal at both polarities.

10. Circuit arrangement according to one of the above claims, **characterized in that** the control device (C) comprises a microcontroller, the functions of the control device (C) being specified by a software program in the microcontroller.

11. Circuit arrangement according to one of the above claims, **characterized in that** the discharge lamp (EL) is an extra-highpressure discharge lamp.

12. Method for operating a discharge lamp, having the following steps:
- providing a measuring device which is designed for delivering a measurement value which is a measure of the magnitude of a lamp voltage
- coupling a discharge lamp to a direct-current source (Q) via a commutating device (S1, S2, S3, S4),
- commutating the polarity of the direct-current source (Q) with the aid of the commutating device (S1, S2, S3, S4) in each case after a predetermined switching time
- storing the measurement value for each polarity,
- comparing the stored measurement values
- extending the switching time at the polarity at which the higher lamp voltage prevails
- resetting the switching time to the predetermined values if the same lamp voltage prevails at both polarities.

13. Software program, **characterized in that** it controls a circuit arrangement according to Claim 1 in such a manner that the method according to Claim 12 proceeds.

14. Computer program product, **characterized in that** the software program according to Claim 13 can be stored on a circuit arrangement according to Claim 1.

## Revendications

1. Circuit pour faire fonctionner une lampe à décharge,
le circuit comprenant un dispositif de commutation (S1, S2, S3, S4),
lequel comporte une entrée (+,-) qui est couplée à une source de courant continu (Q) et comporte une sortie (A1, A2) qui peut être couplée à une lampe à décharge (EL),
le dispositif de commutation (S1, S2, S3, S4) étant réalisé de manière telle qu'il couple la source de courant continu (Q) à la sortie (A1, A2) et que la polarité du couplage de la source de courant continu (Q) avec la sortie (A1, A2) peut être commutée par un dispositif de commande (C),
le dispositif de commande (C) comportant une entrée de mesure (M) qui est couplée à un dispositif de mesure qui est conçu pour fournir une valeur de mesure qui est une mesure de la grandeur d'une tension de lampe,
le circuit (C) étant **caractérisé en ce que** le dispositif de commande commande le dispositif de commutation (S1, S2, S3, S4) de manière telle que la polarité qui est couplée plus longtemps à la sortie (A1, A2) est celle pour laquelle on a une tension de lampe plus élevée.

2. Circuit selon la revendication 1, le dispositif de commande (C) étant **caractérisé en ce qu'**il comporte un comparateur qui stocke la valeur de mesure dans une première et une deuxième polarités, compare les valeurs de mesure stockées et délivre un signal de marquage qui sert au dispositif de commande (C) d'information sur la polarité pour laquelle on a une tension de lampe plus élevée.

3. Circuit selon la revendication 2, le comparateur étant **caractérisé en ce que** les valeurs de mesure stockées sont des valeurs moyennes sur un premier intervalle de temps prédéterminable.

4. Circuit selon la revendication 2 ou 3, le comparateur étant **caractérisé en ce qu'**il délivre uniquement un signal de marquage si la différence des valeurs de mesure stockées dépasse un seuil prédéterminable.

5. Circuit selon la revendication 2 à 4, le comparateur étant **caractérisé en ce qu'**il établit la valeur moyenne de la différence des valeurs de mesure stockées, établit la valeur moyenne de cette différence sur un deuxième intervalle de temps prédéterminable et délivre le signal de marquage si cette valeur moyenne dépasse une valeur limite prédéterminable.

6. Circuit selon l'une des revendications précédentes, **caractérisé en ce que** le dispositif de commande (C) provoque une commutation de la polarité dans un intervalle de temps prédéterminé et **en ce que** le dispositif de commande (C) supprime au moins une commutation qui fait suite à une polarité pour laquelle on a une tension de lampe plus élevée.

7. Circuit selon l'une des revendications 1 à 5, **caractérisé en ce que** le dispositif de commande (C) commande le dispositif de commutation (S1, S2, S3, S4) de manière telle qu'une première polarité est couplée à la sortie (A1, A2) pour une première durée de commutation prédéterminée et une deuxième polarité est couplée à la sortie (A1, A2) pour une deuxième durée de commutation prédéterminée, le dispositif de commande (C) prolongeant la première durée de commutation si l'on a une tension de lampe plus élevée pour la première polarité.

8. Circuit selon la revendication 7, **caractérisé en ce que** le dispositif de commande (C) réduit la deuxième durée de commutation de la valeur de laquelle il prolonge la première durée de commutation.

9. Circuit selon la revendication 7 ou 8, **caractérisé en ce que** le dispositif de commande (C) remet la première et la deuxième durées de commutation sur des valeurs prédéterminées si la tension de lampe est égale pour les deux polarités.

10. Circuit selon l'une des revendications précédentes, **caractérisé en ce que** le dispositif de commande (C) comprend un microcontrôleur, des fonctions du dispositif de commande (C) étant déterminées par un programme logiciel dans le microcontrôleur.

11. Circuit selon l'une des revendications précédentes, **caractérisé en ce que** la lampe à décharge (EL) est une lampe à décharge à pression maximale.

12. Procédé pour faire fonctionner une lampe à décharge, comportant les étapes suivantes :
- mise à disposition d'un dispositif de mesure qui est conçu pour fournir une valeur de mesure qui est une mesure de la grandeur d'une tension de lampe ;
- couplage d'une lampe à décharge à une source de courant continu (Q) via un dispositif de commutation (S1, S2, S3, S4) ;
- commutation de la polarité de la source de courant continu (Q) à l'aide du dispositif de commutation (S1, S2, S3, S4) respectivement après une durée de commutation prédéterminée ;
- stockage de la valeur de mesure pour chaque polarité ;
- comparaison des valeurs de mesures stockées ;
- prolongation de la durée de commutation pour la polarité à laquelle on a la tension de lampe plus élevée ;
- remise de la durée de commutation aux valeurs prédéterminées si on a la même tension de lampe pour les deux polarités.

13. Programme logiciel, **caractérisé en ce qu'**il commande un circuit selon la revendication 1 de manière telle que se déroule le procédé selon la revendication 12.

14. Produit de programme informatique, **caractérisé en ce que** le programme logiciel selon la revendication 13 peut être stocké sur un circuit selon la revendication 1.
